(19) Europäisches Patentamt / European Patent Office / Office européen des brevets

(11) **EP 4 245 567 B1**

(12) **EUROPEAN PATENT SPECIFICATION**

(45) Date of publication and mention
of the grant of the patent:
**08.07.2026  Bulletin 2026/28**

(51) International Patent Classification (IPC):
**B60C 1/00** *(2006.01)*          **C08L 7/00** *(2006.01)*

(21) Application number: **23158706.4**

(52) Cooperative Patent Classification (CPC):
(C-Sets available)
**C08L 7/00; B60C 1/0025;** B60C 2013/006    (Cont.)

(22) Date of filing: **27.02.2023**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.03.2022   JP 2022039110
16.02.2023   JP 2023022526**

(43) Date of publication of application:
**20.09.2023   Bulletin 2023/38**

(73) Proprietor: **Sumitomo Rubber Industries, Ltd.
Kobe-shi, Hyogo 651-0072 (JP)**

(72) Inventors:
• **MIYAZAKI, Sumiko**
**Kobe-shi, Hyogo, 651-0072 (JP)**
• **SATO, Daisuke**
**Kobe-shi, Hyogo, 651-0072 (JP)**

(74) Representative: **Manitz Finsterwald
Patent- und Rechtsanwaltspartnerschaft mbB
Martin-Greif-Straße 1
80336 München (DE)**

(56) References cited:
EP-A1- 2 662 405        EP-A1- 3 375 628
EP-A1- 4 049 863        WO-A1-2021/079650
JP-A- 2015 113 043

**(Cont. next page)**

(52) Cooperative Patent Classification (CPC): (Cont.)

C-Sets
**C08L 7/00, C08L 1/02, C08K 3/04, C08K 5/092;
C08L 7/00, C08L 9/00, C08L 1/02, C08K 3/04,
C08K 5/092**

**Description**

TECHNICAL FIELD

The present invention relates to a tire.

BACKGROUND ART

Tires with various desirable properties have been desired such as ride quality and handling stability. However, these properties are generally contradictory to each other, and it is desirable to simultaneously provide these properties. Further tires are known from EP 3 375 628 A1.

SUMMARY OF INVENTION

TECHNICAL PROBLEM

The present invention aims to solve the above problem and provide a tire having excellent overall performance in terms of handling stability and ride quality.

SOLUTION TO PROBLEM

The present invention provides a tire according to claim 1.

ADVANTAGEOUS EFFECTS OF INVENTION

The tire of the present invention includes a side portion which includes a side component including a rubber composition containing microfibrillated plant fibers and satisfying relationships (1) and (2), and wherein the rubber composition has a plasticizer content of 5 parts by mass or less per 100 parts by mass of a rubber component content in the rubber composition. Thus, the present invention provides a tire having excellent overall performance in terms of handling stability and ride quality.

BRIEF DESCRIPTION OF DRAWINGS

FIG. 1 is a cross-sectional view illustrating a part of a pneumatic tire.
FIG. 2 is an enlarged cross-sectional view illustrating a side portion 3 and its vicinity in the tire 2 of FIG. 1.

DESCRIPTION OF EMBODIMENTS

The tire of the present invention includes a side portion. The side portion includes a side component which includes a rubber composition containing microfibrillated plant fibers and satisfying relationships (1) and (2). The rubber composition further contains a plasticizer of 5 parts by mass or less per 100 parts by mass of a rubber content in the rubber composition.

The mechanism of the above advantageous effect is not clear, but it is believed to be as follows.

As the side component contains microfibrillated plant fibers which may be oriented in the circumferential direction of the tire to maintain the rigidity in the circumferential direction of the tire, the rigidity in the tire circumferential direction can be improved while maintaining ride quality.

At the same time, as the tan $\delta$ of the side component is adjusted to be lower than 0.100 (relationship (1)), it is considered that the phase difference in the response to input can be reduced to improve response; further, due to the high rigidity in the circumferential direction, a large reaction force can be immediately generated when a steering angle is applied.

Meanwhile, reducing the tan $\delta$ of the side component may impair ride quality. However, as the thickness of the side component is reduced with the decrease in the tan $\delta$ (relationship (2)), the side portion can easily flex to maintain or improve ride quality.

Thus, the rigidity in the tire circumferential direction and the response can be improved while maintaining rigidity in the tire radial direction and flexibility, and therefore it is believed that the overall performance in terms of handling stability and ride quality can be improved.

As described, the present invention solves the problem (purpose) of improving overall performance in terms of handling stability and ride quality by formulating the tire to include a side portion including a side component that includes a rubber composition containing microfibrillated plant fibers and satisfying the relationship (1): tan δ < 0.100 and the relationship (2): tan δ/T ≥ 0.020. In other words, the formulation satisfying the relationship (1): tan δ < 0.100 and the relationship (2): tan δ/T ≥ 0.020 does not define the problem (purpose), and the problem herein is to improve overall performance in terms of handling stability and ride quality. In order to solve this problem, the tire has been formulated to satisfy these parameters.

The side portion in the tire of the present invention includes one side component or two or more side components.

Examples of side components include sidewalls, clinches, and run-flat reinforcing layers. Among these, sidewalls or clinches are suitable in order to better achieve the advantageous effect.

The side component(s) in the tire of the present invention includes a (vulcanized) rubber composition satisfying the following relationship (1):

$$(1) \quad \tan \delta < 0.100$$

where tan δ is the loss tangent of the side component determined at a temperature of 30°C, an initial strain of 10%, a dynamic strain of 1%, and a frequency of 10 Hz in an elongation mode.

The tan δ is preferably 0.099 or lower, more preferably 0.095 or lower, still more preferably 0.093 or lower, particularly preferably 0.092 or lower. The lower limit is not limited, but it is preferably 0.050 or higher, more preferably 0.070 or higher, still more preferably 0.080 or higher, particularly preferably 0.085 or higher. When the tan δ is within the range indicated above, the advantageous effect can be suitably achieved.

The side component(s) in the tire of the present invention includes a (vulcanized) rubber composition satisfying the following relationship (2):

$$(2) \quad \tan \delta/T \geq 0.020$$

where tan δ is the loss tangent of the side component determined at a temperature of 30°C, an initial strain of 10%, a dynamic strain of 1%, and a frequency of 10 Hz in an elongation mode, and T is the maximum thickness (mm) of the side component.

The ratio of tan δ/T is preferably 0.023 or higher, more preferably 0.024 or higher, still more preferably 0.040 or higher, particularly preferably 0.046 or higher, most preferably 0.048 or higher. The upper limit is not limited, but it is preferably 0.080 or lower, more preferably 0.070 or lower, still more preferably 0.060 or lower, particularly preferably 0.055 or lower. When the ratio is within the range indicated above, the advantageous effect can be suitably achieved.

The mechanism of the advantageous effect obtained by adjusting the ratio of tan δ/T to a predetermined value or more, particularly by satisfying the relationship: tan δ/T ≥ 0.040, is not clear, but it is considered that further increasing the ratio of tan δ/gauge may increase the effect of improving ride quality. Thus, it is believed that the overall performance in terms of handling stability and ride quality can be significantly improved.

To suitably achieve the advantageous effect, the maximum thickness T of the side component desirably satisfies the following relationship:

$$T \leq 5.0 \text{ mm.}$$

T is preferably 4.0 mm or less, more preferably 3.0 mm or less, still more preferably 2.5 mm or less, particularly preferably 2.0 mm or less. The lower limit is preferably 0.5 mm or more, more preferably 1.0 mm or more, still more preferably 1.3 mm or more, particularly preferably 1.5 mm or more. When T is within the range indicated above, the advantageous effect can be suitably achieved.

To suitably achieve the advantageous effect, the side component(s) desirably includes a (vulcanized) rubber composition satisfying the following relationship:

$$\tan \delta/E^* \times 100 < 4.00$$

where E* and tan δ are the complex modulus (MPa) and the loss tangent, respectively, determined at a temperature of 30°C, an initial strain of 10%, a dynamic strain of 1%, and a frequency of 10 Hz in an elongation mode.

The value of tan δ/E* × 100 is preferably 3.82 or less, more preferably 3.80 or less, still more preferably 3.65 or less, further preferably 3.50 or less, particularly preferably 3.30 or less. The lower limit is preferably 1.00 or more, more preferably 1.20 or more, still more preferably 1.50 or more, particularly preferably 1.65 or more. When the value is within the range indicated above, the advantageous effect can be suitably achieved.

The mechanism of the advantageous effect obtained by adjusting the value of $\tan \delta/E^* \times 100$ to a predetermined value or less, particularly by satisfying the relationship: $\tan \delta/E^* \times 100 \leq 3.80$, is not clear, but it is considered that reducing $\tan \delta$ relative to rubber hardness may further improve response. Thus, it is believed that the overall performance in terms of handling stability and ride quality can be significantly improved.

To suitably achieve the advantageous effect, the side component(s) desirably includes a (vulcanized) rubber composition satisfying the following relationship: $E^* > 2.2$ MPa

where $E^*$ is the complex modulus (MPa) determined at a temperature of 30°C, an initial strain of 10%, a dynamic strain of 1%, and a frequency of 10 Hz in an elongation mode.

$E^*$ is preferably 2.4 MPa or higher, more preferably 2.5 MPa or higher, still more preferably 2.6 MPa or higher, particularly preferably 2.7 MPa or higher. The upper limit is not limited, but it is preferably 8.0 MPa or lower, more preferably 7.0 MPa or lower, still more preferably 6.5 MPa or lower, particularly preferably 6.0 MPa or lower. When $E^*$ is within the range indicated above, the advantageous effect can be suitably achieved.

To suitably achieve the advantageous effect, the side component(s) desirably includes a (vulcanized) rubber composition satisfying the following relationship:

$$M300 > 2.8 \text{ MPa}$$

where M300 is the modulus at 300% elongation.

M300 is preferably 2.9 MPa or higher, more preferably 3.0 MPa or higher, still more preferably 3.2 MPa or higher, further preferably 3.3 MPa or higher, particularly preferably 3.4 MPa or higher. The upper limit is not limited, but it is preferably 5.0 MPa or lower, more preferably 4.5 MPa or lower, still more preferably 4.0 MPa or lower, particularly preferably 3.8 MPa or lower. When M300 is within the range indicated above, the advantageous effect can be suitably achieved.

The mechanism of the advantageous effect obtained by adjusting M300 to a predetermined value or more, particularly by satisfying the relationship: $M300 \geq 3.0$ MPa, is not clear, but increasing modulus at 300% deformation may increase the reaction force upon deformation of the side portion. Thus, it is believed that the overall performance in terms of handling stability and ride quality can be significantly improved.

Herein, the $E^*$ and $\tan \delta$ of the rubber composition mean the $E^*$ and $\tan \delta$ of the vulcanized rubber composition. Moreover, the $E^*$ and $\tan \delta$ values are determined by subjecting the vulcanized rubber composition to viscoelastic testing.

Herein, the $E^*$ and $\tan \delta$ of the (vulcanized) rubber composition are the complex modulus and the loss tangent, respectively, determined at a temperature of 30°C, an initial strain of 10%, a dynamic strain of 1%, and a frequency of 10 Hz in an elongation mode.

Here, the $E^*$ and $\tan \delta$ are measured on a sample having a width of 4 mm, a length of 20 mm, and a thickness of 1 mm cut out from the tire, and the longitudinal direction of the sample corresponds to a direction tangential to the circumferential direction of the tire.

The term "maximum thickness T of the side component" refers to the maximum value of the thickness of the individual side component (e.g., sidewall or clinch). The thickness of the individual side component is measured along the normal to the surface of the side component on the tire inner cavity surface side, passing through a point on the surface of the side component on the tire outer surface side. Here, when the shape of the side component on the inner cavity surface side has a level difference due to the combination with the inwardly adjacent component or other reason, the values measured at points with such a level difference are excluded. For example, when the side component is a sidewall which on the inner cavity surface side is in contact with a carcass layer, the maximum thickness refers to the maximum value of the thickness of the sidewall along the normal to the interface between the sidewall and the carcass layer. If the carcass layer is turned up by a bead portion so that the interface between the sidewall and the carcass layer has a level difference, the values measured at and in the vicinity of the radially outward end point of the turnup part of the carcass layer are excluded.

Herein, the dimensions (e.g., the maximum thickness of the sidewall, the maximum thickness of the clinch) and angle of the individual side component of the tire refer to those measured in a radial cross section of the tire, unless otherwise stated. Simply, they can be determined by cutting the tire in the radial direction and measuring the cut portion, with the width between the bead portions being fixed to the normal rim width.

The term "normal rim" refers to a rim specified by the standard according to which tires are provided, and may be "standard rim" in the JATMA standard, "design rim" in the TRA standard, or "measuring rim" in the ETRTO standard.

Herein, the M300 of the rubber composition means the M300 of the vulcanized rubber composition. Moreover, the M300 (300% modulus) values are measured by a method in accordance with JIS K 6251:2010.

The $\tan \delta$ of the rubber composition may be controlled by the types and amounts of the chemicals (in particular, rubber components, fillers, plasticizers such as oils and resins, sulfur, vulcanization accelerators, silane coupling agents) compounded in the rubber composition. For example, the $\tan \delta$ tends to decrease when using a mixture (masterbatch) of microfibrillated plant fibers and an acidic compound, or using a softener (e.g., resin) highly compatible with rubber components, or using a modified rubber, or reducing the amount of fillers, or reducing the amount of oils, or increasing the amount of sulfur, or increasing the amount of vulcanization accelerators, or increasing the amount of silane coupling agents.

The $E^*$ of the rubber composition may be controlled by the types and amounts of the chemicals (in particular, rubber components, fillers, plasticizers such as oils and resins) compounded in the rubber composition. For example, the $E^*$ tends to increase when using a mixture (masterbatch) of microfibrillated plant fibers and an acidic compound, or reducing the amount of softeners, or increasing the amount of fillers, or increasing the amount of sulfur, or increasing the amount of vulcanization accelerators.

The M300 of the rubber composition may be controlled by the types and amounts of the chemicals (in particular, rubber components, fillers, plasticizers such as oils and resins, vulcanizing agents) compounded in the rubber composition. For example, the M300 tends to increase when using a mixture (masterbatch) of microfibrillated plant fibers and an acidic compound, or increasing the amount of fillers, or reducing the amount of plasticizers, or increasing the amount of sulfur, or increasing the amount of vulcanization accelerators.

The side component(s) in the tire of the present invention includes a side component rubber composition.

The side component rubber composition contains one or more rubber components.

In the side component rubber composition, the rubber components contribute to crosslinking and generally include polymers having a weight average molecular weight (Mw) of 10,000 or more. The rubber components are solid at room temperature (25°C).

The weight average molecular weight of the rubber components is preferably 50,000 or more, more preferably 150,000 or more, still more preferably 200,000 or more, but it is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The rubber components are not limited, and rubber components known in the tire field may be used. Examples include diene rubbers such as isoprene-based rubbers, polybutadiene rubbers (BR), styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). Each of these rubber components may be used alone, or two or more of these may be used in combination. To better achieve the advantageous effect, isoprene-based rubbers, BR, or SBR are preferred among these, with isoprene-based rubbers or BR being more preferred. Moreover, these may be used in combination as described above. Combinations of isoprene-based rubbers and BR, or combinations of isoprene-based rubbers, BR, and SBR may be used. Isoprene-based rubbers may also be used alone.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, including for example those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

When the side component rubber composition contains isoprene-based rubbers, the amount of isoprene-based rubbers based on 100% by mass of the rubber component content is preferably 5% by mass or more, more preferably 50% by mass or more, still more preferably 80% by mass or more, particularly preferably 90% by mass or more, and may be 100% by mass. When the amount is within the range indicated above, the advantageous effect tends to be better achieved. Moreover, the same range is also desirable for a sidewall rubber composition or a clinch rubber composition.

Any BR may be used, and examples include those commonly used in the tire industry, including: high-cis BR such as BR1220 available from Zeon Corporation, BR150B available from Ube Industries, Ltd., and BR1280 available from LG Chem; BR containing 1,2-syndiotactic polybutadiene crystals (SPB) such as VCR412 and VCR617 both available from Ube Industries, Ltd.; and polybutadiene rubbers synthesized using rare earth catalysts (rare earth-catalyzed BR). Each of these polybutadiene rubbers may be used alone, or two or more of these may be used in combination.

The cis content of the BR is preferably 80% by mass or higher, more preferably 85% by mass or higher, still more preferably 90% by mass or higher, but it is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

When the side component rubber composition contains BR, the amount of BR based on 100% by mass of the rubber component content is preferably 5% by mass or more, more preferably 10% by mass or more, still more preferably 15% by mass or more, but it is preferably 50% by mass or less, more preferably 40% by mass or less, still more preferably 30% by mass or less. When the amount is within the range indicated above, the advantageous effect tends to be better achieved.

Any SBR may be used, and examples include emulsion-polymerized styrene-butadiene rubbers (E-SBR) and solution-polymerized styrene-butadiene rubbers (S-SBR). Examples of commercial products include those available from Sumitomo Chemical Co., Ltd., JSR Corporation, Asahi Kasei Corporation, Zeon Corporation, etc.

The styrene content of the SBR is preferably 5% by mass or higher, more preferably 10% by mass or higher, still more preferably 15% by mass or higher, particularly preferably 20% by mass or higher. The styrene content is preferably 50% by mass or lower, more preferably 45% by mass or lower, still more preferably 40% by mass or lower. When the styrene content is within the range indicated above, the advantageous effect tends to be better achieved.

Herein, the styrene content of the SBR can be determined by $^1$H-NMR analysis.

The vinyl content of the SBR is preferably 10% by mass or higher, more preferably 20% by mass or higher, still more preferably 30% by mass or higher. The vinyl content is preferably 90% by mass or lower, more preferably 80% by mass or lower, still more preferably 70% by mass or lower. When the vinyl content is within the range indicated above, the advantageous effect tends to be better achieved.

Herein, the vinyl content (1,2-butadiene unit content) of the SBR can be measured by infrared absorption spectrometry.

When the side component rubber composition contains SBR, the amount of SBR based on 100% by mass of the rubber component content is preferably 5% by mass or more, more preferably 10% by mass or more, still more preferably 15% by mass or more, but it is preferably 50% by mass or less, more preferably 40% by mass or less, still more preferably 30% by mass or less. When the amount is within the range indicated above, the advantageous effect tends to be better achieved.

The rubber components may include extended rubbers which have been extended by plasticizer components such as oils, resins, and liquid rubbers. These may be used alone or in combinations of two or more. Examples of the plasticizers used in such extended rubbers include those as described later. Moreover, the plasticizer content of the extended rubbers is not limited, but it is usually about 10 to 50 parts by mass per 100 parts by mass of the rubber solids content.

The rubber components may be modified to introduce therein a functional group interactive with filler such as silica.

Examples of the functional group include a silicon-containing group ($-SiR_3$ where each R is the same or different and represents a hydrogen atom, a hydroxy group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxy group, an oxy group, and an epoxy group, each of which may be substituted. Preferred among these is a silicon-containing group. More preferred is - $SiR_3$ where each R is the same or different and represents a hydrogen atom, a hydroxy group, a hydrocarbon group (preferably a C1-C6 hydrocarbon group, more preferably a C1-C6 alkyl group), or an alkoxy group (preferably a C1-C6 alkoxy group), and at least one R is a hydroxy group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

The side component rubber composition contains microfibrillated plant fibers as filler.

To obtain good reinforcement, the microfibrillated plant fibers preferably include cellulose microfibrils. Any cellulose microfibrils derived from naturally-occurring materials may be used. Examples include those derived from: resource biomass such as fruits, grains, and root vegetables; wood, bamboo, hemp, jute, and kenaf, as well as pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. These types of microfibrillated plant fibers may be used alone or in combinations of two or more.

Herein, the term "cellulose microfibrils" typically refers to cellulose fibers having an average fiber diameter within the range of not more than 10 μm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter as indicated above.

The microfibrillated plant fibers may be produced by any method, such as by chemically treating the raw material of the above-mentioned cellulose microfibrils with alkali such as sodium hydroxide as needed, followed by mechanically grinding or beating using a refiner, a twin screw kneader (twin screw extruder), a twin screw kneading extruder, a high pressure homogenizer, a media-agitating mill, a stone mill, a grinder, a vibration mill, a sand grinder, or other devices. With such methods, substantially lignin-free microfibrillated plant fibers can be produced because lignin is separated from the raw material by the chemical treatment. Other methods include ultra-high pressure treatment of the raw material of the above-mentioned cellulose microfibrils.

For example, the microfibrillated plant fibers may be commercially available from Sugino Machine Limited, etc.

Here, the microfibrillated plant fibers may be prepared by the above-described production method followed by further treatment such as oxidation or various chemical modifications, or may be prepared by treatment (e.g., oxidation or various chemical modifications) of a naturally-occurring material usable as the source of the above-mentioned cellulose microfibrils (e.g., wood, pulp, bamboo, hemp, jute, kenaf, agricultural waste, cloth, paper, ascidian cellulose, etc.) as a cellulose material, optionally followed by a fibrillation process. For example, oxidized microfibrillated plant fibers may be suitably used.

An exemplary oxidation process uses an N-oxyl compound, for example. The oxidation process using an N-oxyl compound may be carried out, for example, by reacting microfibrillated plant fibers with a co-oxidant in water in the presence of the N-oxyl compound as an oxidation catalyst. Examples of the N-oxyl compound include 2,2,6,6-tetramethylpiperidine-1-oxyl (TEMPO) and derivatives thereof. Examples of the co-oxidant include sodium hypochlorite.

The average fiber diameter of the microfibrillated plant fibers is preferably 10 $\mu$m or less. When the average fiber diameter is within the range indicated above, the microfibrillated plant fibers can exhibit improved dispersion in the elastomer. Moreover, the damage of the microfibrillated plant fibers during processing tends to be reduced. The average fiber diameter is more preferably 500 nm or less, still more preferably 100 nm or less, particularly preferably 50 nm or less. Moreover, the lower limit of the average fiber diameter is not limited, but it is preferably 4 nm or more, more preferably 10 nm or more, still more preferably 20 nm or more, because otherwise the entangled microfibrillated plant fibers would be less likely to be separated from each other and thus less likely to be dispersed.

The average fiber length of the microfibrillated plant fibers is preferably 100 nm or more, more preferably 300 nm or more, still more preferably 500 nm or more, further preferably 1 $\mu$m or more, particularly preferably 2 $\mu$m or more. The average fiber length is also preferably 5 mm or less, more preferably 1 mm or less, still more preferably 50 $\mu$m or less, further preferably 5 $\mu$m or less, particularly preferably 3 $\mu$m or less, most preferably 2 $\mu$m or less. When the average fiber length is less than the lower limit or more than the upper limit, the same tendency as described for the average fiber diameter tends to occur.

Here, when a combination of two or more types of microfibrillated plant fibers is used, the average fiber diameter and the average fiber length are each calculated as the average of all the microfibrillated plant fibers.

Herein, the average fiber diameter and average fiber length of the microfibrillated plant fibers may be measured by image analysis using scanning electron micrographs, image analysis using transmission electron micrographs, image analysis using atomic force micrographs, X-ray scattering data analysis, aperture impedance method (Coulter principle), or other methods.

The amount of microfibrillated plant fibers per 100 parts by mass of the rubber component content in the side component rubber composition is preferably 1 part by mass or more, more preferably 5 parts by mass or more, still more preferably 8 parts by mass or more, particularly preferably 10 parts by mass or more. The upper limit of the amount is preferably 60 parts by mass or less, more preferably 50 parts by mass or less, still more preferably 40 parts by mass or less. When the amount is within the range indicated above, the advantageous effect tends to be better achieved. Moreover, the same range is also desirable for a sidewall rubber composition or a clinch rubber composition.

To better achieve the advantageous effect, the side component rubber composition desirably contains a dicarboxylic acid.

The mechanism of such an advantageous effect is not clear, but it is considered that the OH groups of the dicarboxylic acid may interact with the OH groups of the microfibrillated plant fibers to improve dispersion, thereby resulting in less heat build-up and higher rigidity. Thus, it is believed that the overall performance in terms of handling stability and ride quality can be improved.

Any dicarboxylic acid having two carboxyl groups may be used. Examples include aliphatic dicarboxylic acids such as sebacic acid, malonic acid, succinic acid, glutaric acid, adipic acid, pimelic acid, suberic acid, azelaic acid, undecanoic acid, undecanedioic acid, dodecanedioic acid, and dimer acid; alicyclic dicarboxylic acids such as 1,4-cyclohexanedicarboxylic acid and 1,3-cyclohexanedicarboxylic acid; alicyclic dicarboxylic acids such as 1,2-cyclohexanedicarboxylic acid; aromatic dicarboxylic acids such as orthophthalic acid, xylylenedicarboxylic acid, and naphthalenedicarboxylic acid; and hydroxycarboxylic acids such as malic acid, lactic acid, glycolic acid, gluconic acid, and citric acid. Aliphatic dicarboxylic acids are desirable among these.

The number of carbon atoms of the dicarboxylic acids is preferably 2 or more, more preferably 3 or more, still more preferably 4 or more, further preferably 5 or more. The upper limit of the number of carbon atoms of the dicarboxylic acids is preferably 10 or less, more preferably 9 or less, still more preferably 8 or less, further preferably 6 or less. When the number of carbon atoms is within the range indicated above, the advantageous effect tends to be better achieved.

The amount of dicarboxylic acids per 100 parts by mass of the rubber component content in the side component rubber composition is preferably 1 part by mass or more, more preferably 5 parts by mass or more, still more preferably 8 parts by mass or more, particularly preferably 10 parts by mass or more. The upper limit of the amount is preferably 60 parts by mass or less, more preferably 50 parts by mass or less, still more preferably 40 parts by mass or less. When the amount is within the range indicated above, the advantageous effect tends to be better achieved. Moreover, the same range is also desirable for a sidewall rubber composition or a clinch rubber composition.

In the side component rubber composition, the ratio of the amount of microfibrillated plant fibers (solids) to the amount of dicarboxylic acids [microfibrillated plant fiber content (parts by mass)/dicarboxylic acid content (parts by mass)] is preferably 10/90 to 90/10, more preferably 20/80 to 80/20, still more preferably 30/70 to 70/30, particularly preferably 40/60 to 60/40, most preferably 50/50 to 60/40. When the ratio is within the range indicated above, the advantageous effect tends to be better achieved. Moreover, the same range is also desirable for a sidewall rubber composition or a clinch rubber composition.

The side component rubber composition desirably contains additional fillers other than microfibrillated plant fibers.

The amount of such additional fillers (the total amount of additional fillers such as carbon black and silica) per 100 parts by mass of the rubber component content in the side component rubber composition is preferably 5 parts by mass or more, more preferably 20 parts by mass or more, still more preferably 30 parts by mass or more. The upper limit of the amount is preferably 100 parts by mass or less, more preferably 70 parts by mass or less, still more preferably 50 parts by mass or less. When the amount is within the range indicated above, the advantageous effect tends to be better achieved. Moreover, the same range is also desirable for a sidewall rubber composition or a clinch rubber composition.

The additional fillers are not limited, and those known in the rubber field are usable. Examples include inorganic fillers such as silica, carbon black, calcium carbonate, talc, alumina, clay, aluminum hydroxide, aluminum oxide, and mica; and bio char. To better achieve the advantageous effect, carbon black or silica is preferred among these.

Any carbon black may be used in the side component rubber composition, and examples include N134, N110, N220, N234, N219, N339, N330, N326, N351, N550, and N762. Examples of commercial products include those available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. In addition to the above-mentioned carbon black made from mineral oils or the like, carbon black made from biomass materials such as lignin is also usable. These may be used alone or in combinations of two or more.

In the side component rubber composition, the nitrogen adsorption specific surface area ($N_2SA$) of the carbon black is preferably 30 $m^2/g$ or more, more preferably 35 $m^2/g$ or more, still more preferably 40 $m^2/g$ or more, further preferably 41 $m^2/g$ or more. The $N_2SA$ is also preferably 100 $m^2/g$ or less, more preferably 80 $m^2/g$ or less, still more preferably 60 $m^2/g$ or less, particularly preferably 50 $m^2/g$ or less. When the $N_2SA$ is within the range indicated above, the advantageous effect tends to be better achieved.

Here, the $N_2SA$ of the carbon black can be determined in accordance with JIS K 6217-2:2001.

When the side component rubber composition contains carbon black, the amount of carbon black per 100 parts by mass of the rubber component content is preferably 10 parts by mass or more, more preferably 20 parts by mass or more, still more preferably 30 parts by mass or more. The upper limit of the amount is preferably 70 parts by mass or less, more preferably 50 parts by mass or less, still more preferably 40 parts by mass or less. When the amount is within the range indicated above, the advantageous effect tends to be better achieved. Moreover, the same range is also desirable for a sidewall rubber composition or a clinch rubber composition.

Examples of usable silica include dry silica (anhydrous silica) and wet silica (hydrous silica). Wet silica is preferred among these because it contains a large number of silanol groups. Examples of commercial products include those available from Degussa, Rhodia, Tosoh Silica Corporation, Solvay Japan, Tokuyama Corporation, etc. In addition to the above-mentioned silica, silica made from biomass materials such as rice husks is also usable. These may be used alone or in combinations of two or more.

The nitrogen adsorption specific surface area ($N_2SA$) of the silica is preferably 50 $m^2/g$ or more, more preferably 100 $m^2/g$ or more, still more preferably 150 $m^2/g$ or more, particularly preferably 170 $m^2/g$ or more. Moreover, the upper limit of the $N_2SA$ of the silica is not limited, but it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved.

Here, the $N_2SA$ of the silica is measured by a BET method in accordance with ASTM D3037-93.

When the side component rubber composition contains silica, the amount of silica per 100 parts by mass of the rubber component content is preferably 10 parts by mass or more, more preferably 20 parts by mass or more, still more preferably 30 parts by mass or more. The upper limit of the amount is preferably 70 parts by mass or less, more preferably 60 parts by mass or less, still more preferably 50 parts by mass or less. When the amount is within the range indicated above, the advantageous effect tends to be better achieved. Moreover, the same range is also desirable for a sidewall rubber composition or a clinch rubber composition.

The side component rubber composition which contains silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Examples of commercial products include those available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content in the side component rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The side component rubber composition may contain a plasticizer.

Here, the term "plasticizer" refers to a material that imparts plasticity to rubber components. Examples include liquid plasticizers (plasticizers which are liquid at room temperature (25°C)) and resins (resins which are solid at room temperature (25°C)).

The amount of plasticizers (the total amount of plasticizers) per 100 parts by mass of the rubber component content in the side component rubber composition is 5 parts by mass or less, and may be 0 parts by mass. When the amount is within the range indicated above, the advantageous effect tends to be better achieved. Here, the amount of plasticizers includes the amount of the plasticizer components used in the extended rubbers, if used.

Any liquid plasticizer (plasticizer which is liquid at room temperature (25°C)) may be used in the side component rubber composition, and examples include oils and liquid polymers (liquid resins, liquid diene polymers, liquid farnesene polymers, etc.). These may be used alone or in combinations of two or more.

The amount of liquid plasticizers per 100 parts by mass of the rubber component content in the side component rubber composition is 5 parts by mass or less, and may be 0 parts by mass. When the amount is within the range indicated above, the advantageous effect tends to be better achieved. Here, the amount of liquid plasticizers includes the amount of the oils contained in the oil extended rubbers, if used. Moreover, the same range is also suitable for the amount of oils.

Examples of oils include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Examples of commercial products include those available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, or plant oils are preferred among these. Moreover, in view of life cycle assessment, oils after being used as lubricating oils in mixers for mixing rubber, engines, or other applications, waste cooking oils, or the like may appropriately be used as the process oils or plant oils.

Examples of liquid resins include terpene resins (including terpene phenol resins and aromatic modified terpene resins), rosin resins, styrene resins, C5 resins, C9 resins, C5/C9 resins, dicyclopentadiene (DCPD) resins, coumarone indene resins (including resins based on coumarone or indene alone), phenol resins, olefin resins, polyurethane resins, and acrylic resins. Hydrogenated products of these resins are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers), all of which are liquid at 25°C. The chain end or backbone of these polymers may be modified with a polar group. Hydrogenated products of these polymers are also usable.

Examples of liquid farnesene polymers include liquid polyfarnesene polymers and liquid farnesene-butadiene copolymers, all of which are liquid at 25°C. The chain end or backbone of these polymers may be modified with a polar group. Hydrogenated products of these polymers are also usable.

Examples of resins (resins which are solid at room temperature (25°C)) that may be used in the side component rubber composition include aromatic vinyl polymers, coumarone-indene resins, coumarone resins, indene resins, phenol resins, rosin resins, petroleum resins, terpene resins, and acrylic resins, all of which are solid at room temperature (25°C). Moreover, these resins may be hydrogenated. These may be used alone or in combinations of two or more. Aromatic vinyl polymers, petroleum resins, and terpene resins are preferred among these.

The amount of such resins per 100 parts by mass of the rubber component content in the side component rubber composition is 5 parts by mass or less, and may be 0 parts by mass. When the amount is within the range indicated above, the advantageous effect tends to be better achieved.

The softening point of the resins is preferably 50°C or higher, more preferably 55°C or higher, still more preferably 60°C or higher. The upper limit is preferably 160°C or lower, more preferably 150°C or lower, still more preferably 145°C or lower. When the softening point is within the range indicated above, the advantageous effect tends to be better achieved.

The softening point of the resins is determined as set forth in JIS K 6220-1:2001 using a ring and ball softening point measuring apparatus and defined as the temperature at which the ball drops down.

Here, the softening point of the resins is usually within about 50°C ± 5°C of the glass transition temperature of the resin component.

The aromatic vinyl polymers refer to polymers containing aromatic vinyl monomers as structure units. Examples include resins produced by polymerizing α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of these resins. DCPD resins or hydrogenated DCPD resins are preferred among these.

The terpene resins refer to polymers containing terpenes as structural units. Examples include polyterpene resins produced by polymerizing terpene compounds, and aromatic modified terpene resins produced by polymerizing terpene compounds and aromatic compounds. Examples of such aromatic modified terpene resins include terpene phenol resins made from terpene compounds and phenolic compounds, terpene styrene resins made from terpene compounds and styrene compounds, and terpene phenol styrene resins made from terpene compounds, phenolic compounds, and styrene compounds. Here, examples of the terpene compounds include α-pinene and β-pinene; examples of the phenolic compounds include phenol and bisphenol A; and examples of the aromatic compounds include styrene compounds such as styrene and α-methylstyrene.

The acrylic resins refer to polymers containing acrylic monomers as structure units. Examples include styrene acrylic resins, such as those which contain carboxy groups and are produced by copolymerizing aromatic vinyl monomer components and acrylic monomer components. Solvent-free, carboxy group-containing styrene acrylic resins are suitable among these.

Examples of commercial plasticizers include those available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The side component rubber composition may contain an antioxidant.

Examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Examples of commercial products include those available from Seiko Chemical Co., Ltd., Sumitomo Chemical Co., Ltd., Ouchi Shinko Chemical Industrial Co., Ltd., Flexsys, etc. Each of these antioxidants may be used alone, or two or more of these may be used in combination.

The amount of antioxidants per 100 parts by mass of the rubber component content in the side component rubber composition is preferably 0.5 parts by mass or more, more preferably 1.0 parts by mass or more, still more preferably 2.0 parts by mass or more, but it is preferably 10.0 parts by mass or less, more preferably 6.0 parts by mass or less, still more preferably 4.0 parts by mass or less. When the amount is within the range indicated above, the advantageous effect tends to be better achieved.

The side component rubber composition may contain a wax.

Any wax may be used, and examples include petroleum waxes such as paraffin waxes and microcrystalline waxes; naturally-occurring waxes such as plant waxes and animal waxes; and synthetic waxes such as polymerized ethylene, propylene, or other similar monomers. Examples of commercial products include those available from Ouchi Shinko Chemical Industrial Co., Ltd., Nippon Seiro Co., Ltd., Seiko Chemical Co., Ltd., etc. Each of these waxes may be used alone, or two or more of these may be used in combination.

The amount of waxes per 100 parts by mass of the rubber component content in the side component rubber composition is preferably 0.5 parts by mass or more, more preferably 1.0 parts by mass or more, but it is preferably 10 parts by mass or less, more preferably 6 parts by mass or less. When the amount is within the range indicated above, the advantageous effect tends to be better achieved.

The side component rubber composition may contain stearic acid.

Conventionally known stearic acid may be used. Examples of commercial products include those available from NOF Corporation, Kao Corporation, Fujifilm Wako Pure Chemical Corporation, Chiba Fatty Acid Co., Ltd., etc. Each of these may be used alone, or two or more of these may be used in combination.

The amount of stearic acid per 100 parts by mass of the rubber component content in the side component rubber composition is preferably 0.5 parts by mass or more, more preferably 1.0 parts by mass or more, still more preferably 2.0 parts by mass or more, but it is preferably 10.0 parts by mass or less, more preferably 6.0 parts by mass or less. When the amount is within the range indicated above, the advantageous effect tends to be better achieved.

The side component rubber composition may contain sulfur.

Examples of sulfur include those commonly used as crosslinking agents in the rubber industry, such as powdered sulfur, precipitated sulfur, colloidal sulfur, insoluble sulfur, highly dispersible sulfur, and soluble sulfur. Examples of commercial products include those available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber component content in the side component rubber composition is preferably 0.5 parts by mass or more, more preferably 1.0 parts by mass or more, still more preferably 1.5 parts by mass or more, particularly preferably 1.8 parts by mass or more, but it is preferably 3.5 parts by mass or less, more preferably 2.8 parts by mass or less, still more preferably 2.5 parts by mass or less. When the amount is within the range indicated above, the advantageous effect tends to be better achieved.

The side component rubber composition may contain a vulcanization accelerator.

Examples of vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Examples of commercial products include those available from Sumitomo Chemical Co., Ltd., Ouchi Shinko Chemical Industrial Co., Ltd., etc. These may be used alone or in combinations of two or more.

The amount of vulcanization accelerators per 100 parts by mass of the rubber component content in the side component rubber composition is preferably 0.5 parts by mass or more, more preferably 0.8 parts by mass or more, still more preferably 1.0 parts by mass or more, but it is preferably 10 parts by mass or less, more preferably 8 parts by mass or less, still more preferably 7 parts by mass or less. When the amount is within the range indicated above, the advantageous effect tends to be better achieved.

In addition to the above-mentioned components, the side component rubber composition may further contain additives commonly used in the tire industry, such as organic peroxides. The amounts of these additives are each preferably 0.1 to 200 parts by mass per 100 parts by mass of the rubber component content.

The side component rubber composition may be prepared by known methods. For example, it may be prepared by kneading the components using a rubber kneading machine such as an open roll mill or a Banbury mixer, and then vulcanizing the kneaded mixture.

To suitably obtain a side component rubber composition that satisfies relationships (1) and (2), it is desirably prepared by firstly forming a mixture (masterbatch) of microfibrillated plant fibers and a dicarboxylic acid by a method including step 1 of preparing a liquid mixture of an aqueous dispersion and/or aqueous solution of the microfibrillated plant fibers with the dicarboxylic acid, and step 2 of removing at least part of water from the liquid mixture, followed by kneading the mixture and other components using a rubber kneading machine such as an open roll mill or a Banbury mixer, and then vulcanizing the kneaded mixture. Here, as long as the preparation method includes the above-mentioned processes, it may include other processes. Moreover, each process may be performed once or may be repeated multiple times.

In step 1, the aqueous dispersion and/or aqueous solution of the microfibrillated plant fibers may be prepared by known methods, such as by dispersing or dissolving the microfibrillated plant fibers in water using a high-speed homogenizer, an ultrasonic homogenizer, a colloid mill, a blender mill, or other devices. The temperature and time for the preparation may be appropriately selected so that the microfibrillated plant fibers can be sufficiently dispersed or dissolved in water.

The amount of microfibrillated plant fibers (solids) in the aqueous dispersion and/or aqueous solution of the microfibrillated plant fibers is preferably 0.2 to 20% by mass, more preferably 0.5 to 10% by mass, still more preferably 0.5 to 3% by mass.

In step 1, the liquid mixture of an aqueous dispersion and/or aqueous solution of the microfibrillated plant fibers with the dicarboxylic acid may be prepared by known methods, such as using a high-speed homogenizer, an ultrasonic homogenizer, a colloid mill, a blender mill, or other devices. The temperature and time for the mixing may be appropriately selected so that the microfibrillated plant fibers and dicarboxylic acid can be sufficiently mixed into water.

In step 1, to suitably achieve the advantageous effect, the mixing ratio of the microfibrillated plant fibers (solids) to the dicarboxylic acid [microfibrillated plant fiber content (parts by mass)/dicarboxylic acid content (parts by mass)] is preferably 10/90 to 90/10, more preferably 20/80 to 80/20, still more preferably 30/70 to 70/30, particularly preferably 40/60 to 60/40, most preferably 50/50 to 60/40.

In step 2, at least part of water is removed from the liquid mixture obtained in step 1. Various methods which can remove water may be used. Exemplary suitable methods include adding a strong acid such as hydrochloric acid or sulfuric acid, followed by heating, for example, at 80 to 220°C, preferably at 120 to 200°C, more preferably at 140 to 180°C to azeotropically or otherwise remove water.

Then, the resulting mixture and other components are subjected to, for example, a method of kneading using a rubber kneading machine such as an open roll mill or a Banbury mixer or using an extruder (e.g., a twin screw extruder), and then vulcanized to obtain a (vulcanized) side component rubber composition.

The kneading conditions are as follows. In a base kneading step of kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120 to 200°C, preferably 140 to 180°C.

The side component rubber composition may be suitably used in a tire. Examples of tires include pneumatic tires and non-pneumatic tires, with pneumatic tires being preferred among these. In particular, the tire may be suitably used as a summer tire or winter tire (e.g., studless winter tire, cold weather tire, snow tire, or studded tire). The tire may be used as a tire for passenger cars, large passenger cars, large SUVs, heavy duty vehicles such as trucks and buses, light trucks, or motorcycles, or as a racing tire (high performance tire), etc.

The tire may be produced from the side component rubber composition by usual methods. For example, an unvulcanized rubber composition containing various materials may be extruded into the shape of a side component and then formed together with other tire components in a usual manner on a tire building machine to build an unvulcanized tire, which may then be heated and pressurized in a vulcanizer to produce a tire.

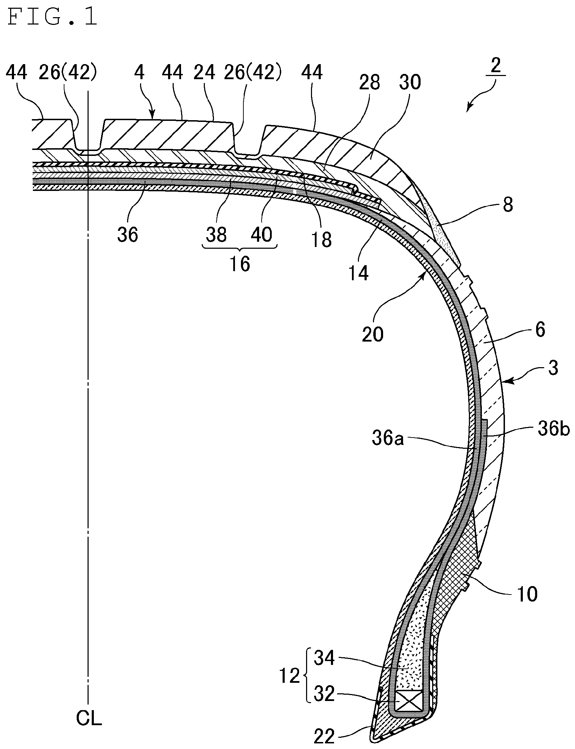

An example of a tire including a side component rubber composition as described above is described with reference to FIG. 1.

In FIG. 1, the vertical direction corresponds to the radial direction of the tire 2, the horizontal direction corresponds to the axial direction of the tire 2, and the direction perpendicular to the paper corresponds to the circumferential direction of the tire 2. A tread 4 includes a cap layer 30 and a base layer 28.

Here, although FIG. 1 shows an example of a two-layer tread 4 consisting of a cap layer 30 and a base layer 28, the tread may be a single-layer tread or a three- or more-layer tread.

In the tire 2, each sidewall 6 extends substantially inwardly in the radial direction from the end of the tread 4. The radially outer portion of the sidewall 6 is bonded to the tread 4. The radially inner portion of the sidewall 6 is bonded to a clinch 10. The sidewall 6 can prevent damage to a carcass 14. In the tire 2, the sidewall 6 and/or the clinch 10 includes the side component rubber composition satisfying the relationship (1): tan $\delta$ < 0.100. Moreover, the side component rubber composition desirably satisfies the relationships: tan $\delta$/E* × 100 < 4.00; E* > 2.2 MPa; and M300 > 2.8 MPa.

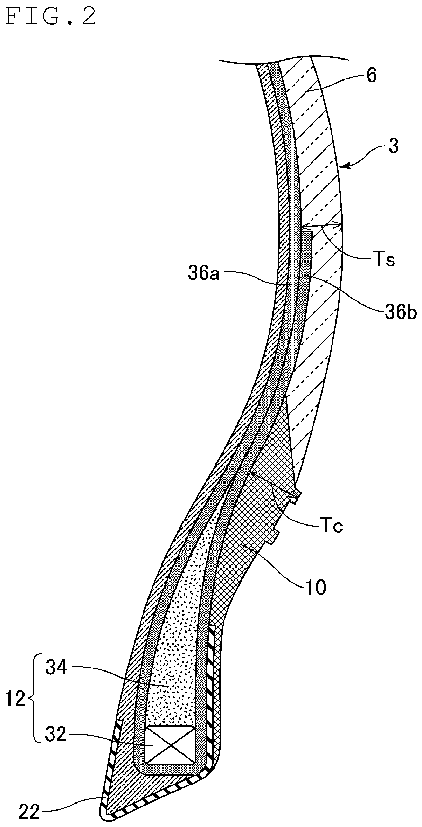

FIG. 2 is an enlarged cross-sectional view illustrating a side portion 3 and its vicinity in the tire 2 of FIG. 1.

The maximum thickness Ts of the sidewall 6 means the maximum value of the thickness of the sidewall 6, and the thickness is measured along the normal to the surface of the sidewall 6 on the tire inner cavity surface side, passing through a point on the surface of the sidewall 6 on the tire outer surface side. In the tire 2 of FIG. 2 in which the sidewall 6 on the inner cavity surface side is in contact with a carcass ply 36 (carcass layer), the maximum thickness refers to the maximum value of the thickness of the sidewall 6 along the normal to the interface between the sidewall 6 and the carcass ply 36.

In FIG. 1, each wing 8 is located between the tread 4 and the sidewall 6. The wing 8 is bonded to both the tread 4 and the sidewall 6.

Each clinch 10 is located substantially radially inward of the sidewall 6. The clinch 10 is located axially outward of a bead 12 and the carcass 14.

Each bead 12 is located axially inward of the clinch 10. The bead 12 includes a core 32 and an apex 34 that radially outwardly extends from the core 32. The core 32 desirably has a ring form and contains a wound non-stretchable wire. The apex 34 is radially outwardly tapered.

The carcass 14 includes the carcass ply 36. Although the carcass 14 in the tire 2 includes one carcass ply 36, the carcass may include two or more carcass plies.

In the tire 2, the carcass ply 36 extends between the beads 12 on opposite sides along the tread 4 and the sidewalls 6. The carcass ply 36 is folded around each core 32 from the inside to the outside in the axial direction. Due to this folding, the carcass ply 36 is provided with a main portion 36a and a pair of folded portions 36b. Namely, the carcass ply 36 includes the main portion 36a and the pair of folded portions 36b.

Though not shown, the carcass ply 36 desirably includes a large number of parallel cords and a topping rubber. The absolute value of the angle of each cord to the equatorial plane is suitably from 75° to 90°. In other words, this carcass 14 preferably has a radial structure.

In FIG. 1, a belt 16 is located radially inward of the tread 4. The belt 16 is stacked on the carcass 14. The belt 16 reinforces the carcass 14. The belt 16 consists of an interior layer 38 and an exterior layer 40. As is clear from FIG. 1, the interior layer 38 is desirably slightly wider in the axial direction than the exterior layer 40. In the tire 2, the axial width of the belt 16 is preferably at least 0.6 times, but preferably not more than 0.9 times the cross-sectional width (see JATMA) of the tire 2.

Though not shown, the interior layer 38 and the exterior layer 40 each desirably include a large number of parallel cords and a topping rubber. In other words, the belt 16 contains a large number of parallel cords. Each cord is tilted relative to the equatorial plane. The absolute value of the tilt angle is generally at least 10° but not greater than 35°. The tilt direction of the cords in the interior layer 38 relative to the equatorial plane is opposite to the tilt direction of the cords in the exterior layer 40 relative to the equatorial plane.

In FIG. 1, a band 18 is located radially outward of the belt 16. The band 18 has a width that is equal to the width of the belt 16 with respect to the axial direction. The band 18 may be wider than the belt 16.

Though not shown, the band 18 desirably includes cords and a topping rubber. The cords are spirally wound. This band 18 has what is called a jointless structure. The cords extend substantially in the circumferential direction. The angle of the cords to the circumferential direction is preferably 5° or smaller or even 2° or smaller. As the belt 16 is restrained by these cords, lifting of the belt 16 is suppressed.

In FIG. 1, the belt 16 and the band 18 form a reinforcement layer. The reinforcement layer may be formed only of the belt 16.

An innerliner 20 is located inward of the carcass 14. The innerliner 20 is bonded to the inner surface of the carcass 14. The base material rubber of the innerliner 20 is typically a butyl rubber or halogenated butyl rubber. The innerliner 20 maintains the internal pressure of the tire 2.

Each chafer 22 is located near the bead 12. In this embodiment, the chafer 22 desirably includes a rubber and a fabric impregnated with the rubber. The chafer 22 may be integrated with the clinch 10.

In the tire 2, the tread 4 has grooves 26 including main grooves 42. As shown in FIG. 1, the tread 4 has a plurality of, specifically three, main grooves 42 engraved thereon. The main grooves 42 are positioned at intervals in the axial direction. As the three main grooves 42 are engraved on the tread 4, the tread 4 is provided with four ribs 44 extending in the circumferential direction. In other words, each main groove 42 is between one rib 44 and another rib 44.

The main grooves 42 extend in the circumferential direction. The main grooves 42 are continuous in the circumferential direction without interruption. The main grooves 42 promote drainage of water present between the road surface and the tire 2, e.g., in rainy weather. Thus, the tire 2 can sufficiently contact the road surface even when the road surface is wet.

EXAMPLES

Examples (working examples) which are considered preferable to implement the invention are described below although the scope of the present invention is not limited to the examples.

The chemicals used in the examples and comparative examples are listed below.

NR: TSR20

BR: BR150B available from Ube Industries, Ltd. (cis content: 97% by mass)

Microfibrillated plant fibers: biomass nanofibers available from Sugino Machine Limited (product name "BiNFi-s cellulose", solids content: 2% by mass, moisture content: 98% by mass, average fiber diameter: 10 to 50 nm, average fiber length: 2 to 5 $\mu$m)

Succinic acid: available from Tokyo Chemical Industry Co., Ltd.

Glutaric acid: available from Tokyo Chemical Industry Co., Ltd.

Adipic acid: available from Tokyo Chemical Industry Co., Ltd.

Suberic acid: available from Tokyo Chemical Industry Co., Ltd.

Azelaic acid: available from Tokyo Chemical Industry Co., Ltd.

Mineral oil: PS-32 available from Idemitsu Kosan Co., Ltd.

Carbon black: Diablack N550 available from Mitsubishi Chemical Corporation ($N_2SA$: 41 $m^2/g$)

Antioxidant: NOCRAC 6C available from Ouchi Shinko Chemical Industrial Co., Ltd.

Stearic acid: TSUBAKI available from NOF Corporation

Zinc oxide: zinc oxide #2 available from Mitsui Mining & Smelting Co., Ltd.

Sulfur: Seimi sulfur available from Nippon Kanryu Industry Co., Ltd.

Vulcanization Accelerator: NOCCELER NS available from Ouchi Shinko Chemical Industrial Co., Ltd.

<Preparation of masterbatch (MB)>

An amount of 1000 g of pure water is added to 500 g of microfibrillated plant fibers to prepare a 0.5% by mass (solids concentration) microfibrillated plant fiber suspension. The suspension is agitated using a high-speed homogenizer ("T50" available from IKA Japan, rotation speed: 8000 rpm) for about five minutes to prepare a uniform aqueous dispersion.

According to the formulation recipe shown in Table 1, the aqueous dispersion (calculated as the dry mass of the microfibrillated plant fibers (solids)) prepared above is mixed with each of the various dicarboxylic acids, and toluene is further added in an amount of 100 parts by mass per 100 parts by mass of the microfibrillated plant fibers, followed by mixing.

A small amount of hydrochloric acid is added to the resulting mixture and then heated to 80°C to azeotropically remove water.

After the water removal, the mixture is agitated and mixed at 50°C for five minutes using a high-speed homogenizer ("T50" available from IKA Japan, rotation speed: 8000 rpm). Thus, each MB is prepared.

[Table 1]

|  | MB (masterbatch) | | | | |
| --- | --- | --- | --- | --- | --- |
|  | 1 | 2 | 3 | 4 | 5 |
| Microfibrillated plant fibers | 10 | 10 | 10 | 10 | 10 |
| Succinic acid | 10 |  |  |  |  |
| Glutaric acid |  | 10 |  |  |  |
| Adipic acid |  |  | 10 |  |  |
| Suberic acid |  |  |  | 10 |  |
| Azelaic acid |  |  |  |  | 10 |

(Preparation of test tire)

According to the formulation recipe shown in Table 2, the materials other than the sulfur and vulcanization accelerator are kneaded for four minutes at 150°C using a 1.7 L Banbury mixer.

Next, the kneaded mixture is kneaded with the sulfur and vulcanization accelerator for four minutes at 80°C in an open roll mill to obtain an unvulcanized rubber composition.

The unvulcanized rubber composition is formed into the shape of a sidewall and assembled with other tire components on a tire building machine to build an unvulcanized tire. The unvulcanized tire is then vulcanized at 170°C for 12 minutes to prepare a test tire (size: 195/65R15, specification: indicated in each table).

The test tires prepared from compositions whose formulation is changed as shown in each table were simulated, and the results calculated according to the below-described evaluations are shown in the tables.

Here, the standard comparative example used is Comparative Example 1.

<Viscoelastic testing>

A viscoelastic testing sample having a width of 4 mm, a length of 20 mm, and a thickness of 1 mm is collected from the inside of a sidewall rubber layer in each test tire such that the longitudinal direction of the sample corresponds to the tangential direction of the tire circumference. The tan $\delta$ and E* of the sidewall rubber are measured at a temperature of 30°C, an initial strain of 10%, a dynamic strain of 1%, and a frequency of 10 Hz in an elongation mode using a RSA series measuring machine available from TA Instruments.

Here, the thickness direction of the sample corresponds to the radial direction of the tire.

<Stress at 300% elongation (M300)>

A No. 7 dumbbell-shaped test piece having a thickness of 1 mm is prepared from a sample collected from the inside of a sidewall rubber layer in each test tire. The test piece is subjected to a tensile test at 20°C in accordance with JIS K 6251:2010 to measure the stress at 300% elongation (M300).

<Handling stability>

The test tires are mounted on each wheel of a front-engine, front-wheel-drive car of 2000 cc displacement made in Japan. A driver drives the car in a zig-zag fashion on a test course and then subjectively evaluates the handling stability. The results are expressed as an index relative to that of the standard comparative example taken as 100. A higher index indicates better handling stability.

<Ride quality>

The test tires are each attached to a 15×6JJ aluminum wheel rim, inflated to an internal pressure of 210 kPa (the same pressure for the front and rear tires), and then mounted on the four wheels of a front-engine, front-wheel-drive car of 2000 cc displacement made in Japan, and a driver alone drives the car on a test course and subjectively evaluates the ride quality. The results are expressed as an index relative to that of the standard comparative example taken as 100. A higher index indicates better ride quality.

<Overall performance>

The overall performance in terms of handling stability and ride quality is evaluated from the sum of the two indices obtained in the evaluation of handling stability and the evaluation of ride quality. A larger value indicates better overall performance.

[Table 2]

| Category | Item | Ex. 1 | Ex. 2 | Ex. 3 | Ex. 4 | Ex. 5 | Ex. 6 | Ex. 7 | Ex. 8 | Ex. 9 | Comp. 1 | Comp. 2 | Comp. 3 | Comp. 4 | Comp. 5 | Comp. 6 | Comp. 7 | Comp. 8 | Comp. 9 | Comp. 10 |
|---|---|---|---|---|---|---|---|---|---|---|---|---|---|---|---|---|---|---|---|---|
| Formulation (parts by mass) | NR | 100 | 100 | 100 | 100 | 100 | 100 | 100 | 50 | 50 | 100 | 100 | 100 | 100 | 100 | 100 | 100 | 100 | 100 | 50 |
| | BR | | | | | | | | 50 | 50 | | | | | | | | | | 50 |
| | MB1 | 20 (10/10) | 20 (10/10) | | 20 | | | | 20 (10/10) | 20 (10/10) | | | | | | | | | | |
| | MB2 | | | 20 (10/10) | 20 (10/10) | | | | | | | | | | | | | | | |
| | MB3 | | | | | 20 (10/10) | | | | | | | | | | | | | | |
| | MB4 | | | | | | 20 (10/10) | | | | | | | | | | | | | |
| | MB5 | | | | | | | 20 (10/10) | | | | | | | | | | | | |
| | Microfibrillated plant fibers | | | | | | | | | | | 10 | | | | | | | | 10 |
| | Succinic acid | | | | | | | | | | | | | | 10 | | | | | |
| | Glutaric acid | | | | | | | | | | | | | | | 10 | | | | |
| | Adipic acid | | | | | | | | | | | | | | | | 10 | | | |
| | Suberic acid | | | | | | | | | | | | | | | | | 10 | | |
| | Azelaic acid | | | | | | | | | | | | | | | | | | 10 | |
| | Mineral oil | | | | | | | | | | | | | 10 | | | | | | |
| | Carbon black | 30 | 30 | 30 | 30 | 30 | 30 | 30 | 30 | 30 | 30 | 30 | 30 | 30 | 30 | 30 | 30 | 30 | 30 | 30 |
| | Antioxidant | 2 | 2 | 2 | 2 | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 | 2 | 2 | 2 | 2 |
| | Zinc oxide | 3 | 3 | 3 | 3 | 3 | 3 | 3 | 3 | 3 | 3 | 3 | 3 | 3 | 3 | 3 | 3 | 3 | 3 | 3 |
| | Sulfur | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator | 1 | 1 | 1 | 1 | 1 | 1 | 1 | 1 | 1 | 1 | 1 | 1 | 1 | 1 | 1 | 1 | 1 | 1 | 1 |
| Physical properties / Specification | M300 (MPa) | 2.9 | 2.9 | 3.4 | 3.4 | 3.3 | 3.2 | 3.4 | 4.0 | 4.0 | 2.9 | 2.4 | 2.9 | 0.7 | 0.7 | 0.7 | 0.8 | 0.9 | 1 | 3.2 |
| | E* (MPa) | 2.4 | 2.4 | 2.6 | 2.6 | 2.7 | 2.7 | 2.6 | 6.0 | 6.0 | 2.1 | 2.5 | 2.1 | 2.0 | 2 | 1.9 | 2 | 2 | 1.9 | 3.1 |
| | tan δ | 0.092 | 0.092 | 0.095 | 0.095 | 0.099 | 0.099 | 0.092 | 0.099 | 0.099 | 0.100 | 0.100 | 0.100 | 0.095 | 0.138 | 0.144 | 0.149 | 0.150 | 0.148 | 0.09 |
| | T (mm) thickness of sidewall | 4 | 2 | 4 | 2 | 4 | 4 | 4 | 4 | 2 | 5.5 | 5.5 | 4 | 5.5 | 5.5 | 5.5 | 5.5 | 5.5 | 5.5 | 4 |
| | tan δ/T | 0.023 | 0.046 | 0.024 | 0.048 | 0.025 | 0.025 | 0.023 | 0.025 | 0.050 | 0.018 | 0.018 | 0.025 | 0.017 | 0.025 | 0.026 | 0.027 | 0.027 | 0.027 | 0.023 |
| | tan δ/E* × 100 | 3.82 | 3.82 | 3.65 | 3.65 | 3.65 | 3.74 | 3.57 | 1.65 | 1.65 | 4.83 | 4.00 | 4.83 | 4.75 | 6.90 | 7.58 | 7.45 | 7.50 | 7.79 | 2.90 |
| Evaluation | Handling stability | 110 | 108 | 114 | 112 | 114 | 116 | 116 | 115 | 110 | 100 | 106 | 90 | 104 | 92 | 88 | 88 | 88 | 90 | 95 |
| | Ride quality | 104 | 114 | 106 | 118 | 104 | 104 | 102 | 108 | 118 | 100 | 90 | 104 | 96 | 108 | 108 | 110 | 110 | 110 | 100 |
| | Overall performance | 214 | 222 | 220 | 230 | 218 | 220 | 218 | 223 | 228 | 200 | 196 | 194 | 200 | 200 | 196 | 198 | 198 | 200 | 195 |

Exemplary embodiments of the present invention include:

Embodiment 1. A tire, including a side portion,

the side portion including a side component including a rubber composition,
the rubber composition containing microfibrillated plant fibers and satisfying the following relationships (1) and (2):

$$(1) \quad \tan \delta < 0.100;$$

and

$$(2) \quad \tan \delta/T \geq 0.020$$

where tan δ is a loss tangent of the side component determined at a temperature of 30°C, an initial strain of 10%, a dynamic strain of 1%, and a frequency of 10 Hz in an elongation mode, and T is a maximum thickness (mm) of the side component;
wherein the rubber composition has a plasticizer content of 5 parts by mass or less per 100 parts by mass of a rubber component content in the rubber composition.

Embodiment 2. The tire according to Embodiment 1,
wherein the rubber composition satisfies the following relationship:

$$M300 \geq 3.0 \ MPa$$

where M300 is a modulus at 300% elongation measured in accordance with JIS 6251:2010.
Embodiment 3. The tire according to Embodiment 1 or 2,
wherein the rubber composition satisfies the following relationship:

$$\tan \delta/E^{*} \times 100 \leq 3.80$$

where E* and tan δ are a complex modulus (MPa) and a loss tangent, respectively, determined at a temperature of 30°C, an initial strain of 10%, a dynamic strain of 1%, and a frequency of 10 Hz in an elongation mode.
Embodiment 4. The tire according to any one of Embodiments 1 to 3,
wherein the rubber composition satisfies the following relationship:

$$\tan \delta/T \geq 0.040$$

where tan δ is a loss tangent of the side component determined at a temperature of 30°C, an initial strain of 10%, a dynamic strain of 1%, and a frequency of 10 Hz in an elongation mode, and T is a maximum thickness (mm) of the side component.
Embodiment 5. The tire according to any one of Embodiments 1 to 4,
wherein the rubber composition contains a dicarboxylic acid.
Embodiment 6. The tire according to any one of Embodiments 1 to 5,
wherein the rubber composition satisfies the following relationship:

$$\tan \delta \leq 0.095$$

where tan δ is a loss tangent of the side component determined at a temperature of 30°C, an initial strain of 10%, a dynamic strain of 1%, and a frequency of 10 Hz in an elongation mode.
Embodiment 7. The tire according to any one of Embodiments 1 to 6,
wherein the maximum thickness T of the side component satisfies the following relationship:

$$T \leq 3.0 \ mm.$$

Embodiment 8. The tire according to any one of Embodiments 1 to 7,
wherein the rubber composition satisfies the following relationship:

$$E^{*} \geq 2.6 \ MPa$$

where E* is a complex modulus (MPa) determined at a temperature of 30°C, an initial strain of 10%, a dynamic strain of 1%, and a frequency of 10 Hz in an elongation mode.

Embodiment 9. The tire according to any one of Embodiments 1 to 8,
wherein the rubber composition has a carbon black content of 20 to 50 parts by mass per 100 parts by mass of a rubber component content in the rubber composition.

Embodiment 11. The tire according to any one of Embodiments 1 to 9,
wherein the rubber composition contains at least one rubber component including an isoprene-based rubber.

Embodiment 12. The tire according to any one of Embodiments 1 to 10,
wherein the rubber composition contains rubber components including an isoprene-based rubber and a polybutadiene rubber.

Embodiment 13. The tire according to any one of Embodiments 1 to 11,
wherein the rubber composition has a microfibrillated plant fiber content of 1 to 60 parts by mass per 100 parts by mass of a rubber component content in the rubber composition.

REFERENCE SIGNS LIST

2 pneumatic tire
3 side portion
4 tread
6 sidewall
8 wing
10 clinch
12 bead
14 carcass
16 belt
18 band
20 innerliner
22 chafer
24 tread face
26 groove
28 base layer
30 cap layer
32 core
34 apex
36 carcass ply
36a main portion
36b folded portion
38 interior layer
40 exterior layer
42 main groove
44 rib
CL equatorial plane of tire 2
Ts maximum thickness of sidewall
Tc maximum thickness of clinch

**Claims**

1. A tire, comprising a side portion,

   the side portion comprising a side component comprising a rubber composition,
   the rubber composition containing microfibrillated plant fibers and satisfying the following relationships (1) and (2):

$$(1)\ \tan \delta < 0.100;$$

   and

$$(2) \quad \tan \delta/T \geq 0.020$$

where tan δ is a loss tangent of the side component determined at a temperature of 30°C, an initial strain of 10%, a dynamic strain of 1%, and a frequency of 10 Hz in an elongation mode, and T is a maximum thickness (mm) of the side component;
wherein the rubber composition has a plasticizer content of 5 parts by mass or less per 100 parts by mass of a rubber component content in the rubber composition.

2. The tire according to claim 1,
wherein the rubber composition satisfies the following relationship:

$$M300 \geq 3.0 \text{ MPa}$$

where M300 is a modulus at 300% elongation measured in accordance with JIS 6251:2010.

3. The tire according to claim 1 or 2,
wherein the rubber composition satisfies the following relationship:

$$\tan \delta/E^* \times 100 \leq 3.80$$

where E* and tan δ are a complex modulus (MPa) and a loss tangent, respectively, determined at a temperature of 30°C, an initial strain of 10%, a dynamic strain of 1%, and a frequency of 10 Hz in an elongation mode.

4. The tire according to any one of claims 1 to 3,
wherein the rubber composition satisfies the following relationship:

$$\tan \delta/T \geq 0.040$$

where tan δ is a loss tangent of the side component determined at a temperature of 30°C, an initial strain of 10%, a dynamic strain of 1%, and a frequency of 10 Hz in an elongation mode, and T is a maximum thickness (mm) of the side component.

5. The tire according to any one of claims 1 to 4,
wherein the rubber composition contains a dicarboxylic acid.

6. The tire according to any one of claims 1 to 5,
wherein the rubber composition satisfies the following relationship:

$$\tan \delta \leq 0.095$$

where tan δ is a loss tangent of the side component determined at a temperature of 30°C, an initial strain of 10%, a dynamic strain of 1%, and a frequency of 10 Hz in an elongation mode.

7. The tire according to any one of claims 1 to 6,
wherein the maximum thickness T of the side component satisfies the following relationship:

$$T \leq 3.0 \text{ mm.}$$

8. The tire according to any one of claims 1 to 7,
wherein the rubber composition satisfies the following relationship:

$$E^* \geq 2.6 \text{ MPa}$$

where E* is a complex modulus (MPa) determined at a temperature of 30°C, an initial strain of 10%, a dynamic strain of 1%, and a frequency of 10 Hz in an elongation mode.

9. The tire according to any one of claims 1 to 8,
   wherein the rubber composition has a carbon black content of 20 to 50 parts by mass per 100 parts by mass of a rubber component content in the rubber composition.

**Patentansprüche**

1. Reifen, umfassend einen Seitenabschnitt,

   wobei der Seitenabschnitt eine Seitenkomponente umfasst, die eine Kautschukzusammensetzung umfasst, wobei die Kautschukzusammensetzung mikrofibrillierte Pflanzenfasern enthält und die folgenden Beziehungen (1) und (2) erfüllt:

   $$(1)\ \tan \delta < 0{,}100;$$

   und

   $$(2)\ \tan \delta/T \geq 0{,}020$$

   worin $\tan \delta$ ein Verlusttangens der Seitenkomponente ist, bestimmt bei einer Temperatur von 30 °C, einer Anfangsdehnung von 10 %, einer dynamischen Dehnung von 1 % und einer Frequenz von 10 Hz in einem Dehnungsmodus, und T die maximale Dicke (mm) der Seitenkomponente ist;
   wobei die Kautschukzusammensetzung einen Weichmachergehalt von 5 Massenteilen oder weniger pro 100 Massenteile eines Kautschukkomponentengehalts in der Kautschukzusammensetzung aufweist.

2. Reifen nach Anspruch 1,
   wobei die Kautschukzusammensetzung die folgende Beziehung erfüllt:

   $$M300 \geq 3{,}0\ MPa$$

   worin M300 ein Modul bei 300 % Dehnung ist, gemessen gemäß JIS 6251:2010.

3. Reifen nach Anspruch 1 oder 2,
   wobei die Kautschukzusammensetzung die folgende Beziehung erfüllt:

   $$\tan \delta/E^* \times 100 \leq 3{,}80$$

   worin $E^*$ und $\tan \delta$ ein komplexer Modul (MPa) bzw. ein Verlustfaktor sind, bestimmt bei einer Temperatur von 30 °C, einer Anfangsdehnung von 10 %, einer dynamischen Dehnung von 1 % und einer Frequenz von 10 Hz in einem Dehnungsmodus.

4. Reifen nach einem der Ansprüche 1 bis 3,
   wobei die Kautschukzusammensetzung die folgende Beziehung erfüllt:

   $$\tan \delta/T \geq 0{,}040$$

   worin $\tan \delta$ ein Verlusttangens der Seitenkomponente ist, bestimmt bei einer Temperatur von 30 °C, einer Anfangsdehnung von 10 %, einer dynamischen Dehnung von 1 % und einer Frequenz von 10 Hz in einem Dehnungsmodus, und T eine maximale Dicke (mm) der Seitenkomponente ist.

5. Reifen nach einem der Ansprüche 1 bis 4,
   wobei die Kautschukzusammensetzung eine Dicarbonsäure enthält.

6. Reifen nach einem der Ansprüche 1 bis 5,

wobei die Kautschukzusammensetzung die folgende Beziehung erfüllt:

$$\tan \delta \leq 0{,}095$$

worin $\tan \delta$ ein Verlusttangens der Seitenkomponente ist, bestimmt bei einer Temperatur von 30 °C, einer Anfangsdehnung von 10 %, einer dynamischen Dehnung von 1 % und einer Frequenz von 10 Hz in einem Dehnungsmodus.

7. Reifen nach einem der Ansprüche 1 bis 6,
   wobei die maximale Dicke T der Seitenkomponente die folgende Beziehung erfüllt:

$$T \leq 3{,}0 \text{ mm.}$$

8. Reifen nach einem der Ansprüche 1 bis 7,
   wobei die Kautschukzusammensetzung die folgende Beziehung erfüllt:

$$E^* \geq 2{,}6 \text{ MPa}$$

wobei $E^*$ ein komplexer Modul (MPa) ist, bestimmt bei einer Temperatur von 30 °C, einer Anfangsdehnung von 10 %, einer dynamischen Dehnung von 1 % und einer Frequenz von 10 Hz in einem Dehnungsmodus.

9. Reifen nach einem der Ansprüche 1 bis 8,
   wobei die Kautschukzusammensetzung einen Rußgehalt von 20 bis 50 Massenteilen pro 100 Massenteile eines Kautschukkomponentengehalts in der Kautschukzusammensetzung aufweist.

**Revendications**

1. Pneumatique comprenant une partie latérale,

   ladite partie latérale comprenant un composant latéral comprenant une composition de caoutchouc,
   la composition de caoutchouc contenant des fibres végétales microfibrillées et satisfaisant aux relations (1) et (2) suivantes :

$$(1)\ \tan \delta < 0{,}100 \ ;$$

   et

$$(2)\ \tan \delta/T \geq 0{,}020$$

   où $\tan \delta$ est la tangente de perte du composant latéral déterminée à une température de 30 °C, une déformation initiale de 10 %, une déformation dynamique de 1 % et une fréquence de 10 Hz en un mode d'allongement, et T est l'épaisseur maximale (mm) du composant latéral ;
   dans lequel la composition de caoutchouc a une teneur en plastifiant de 5 parties en masse ou moins pour 100 parties en masse d'une teneur en composant de caoutchouc dans la composition de caoutchouc.

2. Pneumatique selon la revendication 1,
   dans lequel la composition de caoutchouc satisfait à la relation suivante:

$$M300 \geq 3{,}0 \text{ MPa}$$

   où M300 est un module à 300 % d'allongement mesuré conformément à JIS 6251:2010.

3. Pneumatique selon la revendication 1 ou 2,
   dans lequel la composition de caoutchouc satisfait à la relation suivante :

$$\tan \delta / E^* \times 100 \leq 3{,}80$$

où $E^*$ et tan $\delta$ sont respectivement un module complexe (MPa) et une tangente de perte, déterminés à une température de 30 °C, une déformation initiale de 10 %, une déformation dynamique de 1 % et une fréquence de 10 Hz en un mode d'allongement.

4. Pneumatique selon l'une des revendications 1 à 3,
   dans lequel la composition de caoutchouc satisfait à la relation suivante :

$$\tan \delta / T \geq 0{,}040$$

où tan $\delta$ est une tangente de perte du composant latéral déterminée à une température de 30 °C, une déformation initiale de 10 %, une déformation dynamique de 1 % et une fréquence de 10 Hz en un mode d'allongement, et T est une épaisseur maximale (mm) du composant latéral.

5. Pneumatique selon l'une des revendications 1 à 4,
   dans lequel la composition de caoutchouc contient un acide dicarboxylique.

6. Pneumatique selon l'une des revendications 1 à 5,
   dans lequel la composition de caoutchouc satisfait à la relation suivante :

$$\tan \delta \leq 0{,}095$$

où tan $\delta$ est la tangente de perte du composant latéral déterminée à une température de 30 °C, une déformation initiale de 10 %, une déformation dynamique de 1 % et une fréquence de 10 Hz en un mode d'allongement.

7. Pneumatique selon l'une des revendications 1 à 6,
   dans lequel l'épaisseur maximale T du composant latéral satisfait à la relation suivante :

$$T \leq 3{,}0 \text{ mm.}$$

8. Pneumatique selon l'une des revendications 1 à 7,
   dans lequel la composition de caoutchouc satisfait à la relation suivante :

$$E^* \geq 2{,}6 \text{ MPa}$$

où $E^*$ est un module complexe (MPa) déterminé à une température de 30 °C, une déformation initiale de 10 %, une déformation dynamique de 1 % et une fréquence de 10 Hz en un mode d'allongement.

9. Pneumatique selon l'une des revendications 1 à 8,
   dans lequel la composition de caoutchouc a une teneur en noir de carbone de 20 à 50 parties en masse pour 100 parties en masse d'une teneur en composant de caoutchouc dans la composition de caoutchouc.

FIG.1

FIG.2

**EP 4 245 567 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3375628 A1